# EUROPEAN PATENT APPLICATION

(11) **EP 1 770 104 A1**
(43) Date of publication of application: **04.04.2007**
(21) Application number: 05752975.2
(22) Date of filing: 21.06.2005
(51) Int. Cl.: C08F 220/10, C08F 4/68, C08F 232/00, C08F 210/18

(54) **METHOD FOR PRODUCING (CO)POLYMER HAVING CARBOXYL GROUP**

(30) Priority: 12.07.2004 JP 2004204619
(71) Applicant: JSR Corporation, Tokyo 104-8410 (JP)
(72) Inventor: HAYAKAWA, Toshiyuki, JSR CORPORATION, Tokyo 104-8410 (JP); HATTORI, Iwakazu,2JSR CORPORATION, Tokyo 104-8410 (JP); OOKUBO, Akihiko, JSR CORPORATION, Tokyo 104-8410 (JP)
(74) Representative: TBK-Patent
(86) International application number: PCT/JP2005/011366
(87) International publication number: WO 2006/006351

(57) **Abstract**

A process for producing a carboxyl group-containing (co)polymer, which comprises a reaction step of (co)polymerizing, in the presence of a polymerization catalyst component, at least a particular, functional group-containing olefin compound represented by predetermined general formula and a reaction termination step of terminating the (co)polymerization. The process is simplified in production steps and can produce a carboxyl group-containing (co)polymer easily at a high yield.

## Description

### Technical Field

The present invention relates to a process for producing a carboxyl group-containing (co)polymer, as well as to a carboxyl group-containing (co)polymer produced by the process. More particularly, the present invention relates to a process for producing a carboxyl group-containing (co)polymer, which is simplified in production steps and can produce the carboxyl group-containing (co)polymer at a high yield, as well as to a carboxyl group-containing (co)polymer produced by the process.

### Background Art

Olefin-based copolymer elastomers such as ethylene/α-olefin copolymer elastomer, ethylene/α-olefin/non-conjugated polyene copolymer elastomer and the like are superior in heat resistance and weather resistance and therefore are in wide use as materials for such as automobile parts, machine parts and construction material for civil engineering. The olefin-based copolymer elastomers are also in wide use as a modifier for resins such as polypropylene, polyethylene and the like.

However, having no polar group in the molecular structure, the olefin-based copolymer elastomers have problems that they are low in adhesivity to metals and in problems that they are low in adhesivity to metals and in adhesivity to and compatibility with other-than-polyolefin elastomers and resins and that the molded articles obtained by using the olefin-based copolymer elastomers are low in coatability and printability.

In order to solve these problems, it has been attempted to introduce a polar group into the molecular structure of olefin-based copolymer. Of the polar groups (functional groups) introduced, carboxyl group is very useful in conducting a polymer reaction utilizing the reactivity of carboxyl group, as represented as ionomer. As a result, there have been proposed functional group-introducing olefin-based copolymers obtained by using, as a monomer component, an olefin compound having a functional group such as carboxyl group or the like (see, for example, Patent Documents 1 to 5).

In producing an olefin-based copolymer introduced carboxyl group as a functional group, in the molecular structure, it is necessary to use a carboxyl group-containing compound as a monomer component. In polymerizing such a carboxyl group-containing compound, however, there is required a masking step wherein the carboxyl group-containing compound is contacted with an excessive amount of an organometal to mask the carboxyl group beforehand. As a result, the number of steps for production of olefin copolymer becomes larger and the whole production steps become complicated, which is a problem. In particular, when the carboxyl group-containing compound has a low solubility in the solvent used in the masking step, the masking reaction may become a heterogeneous reaction; therefore, the masking of carboxyl group-containing compound on industrial scale may be difficult.
Patent Document 1: JP-B-49-43275
Patent Document 2: JP-A-1-259012
Patent Document 3: JP-A-64-54009
Patent Document 4: JP-T-4-503963
Patent Document 5: JP-A-2001-247629

### Disclosure of the Invention

The present invention has been made in view of the above-mentioned problems of prior art. The present invention aims at providing a process for producing a carboxyl group-containing (co)polymer, which is simplified in production steps and can produce the carboxyl group-containing (co)polymer at a high yield, and a carboxyl group-containing (co)polymer produced by the process, which can be used as an elastomer superior in adhesivity to and compatibility with other materials and suitable for materials for such as automobile parts, electronic parts and construction material for civil engineering.

The present inventors made an intensive study in order to achieve the above aim. As a result, it was found that the above aim can be achieved by (co)polymerizing a particular, functional group-containing olefin compound (which is an ester compound) and terminating the (co)polymerization. The finding has led to the completion of the present invention.

The present invention provides, as shown below, a process for producing a carboxyl group-containing (co)polymer, as well as a carboxyl group-containing (co)polymer produced by the process.

[1] A process for producing a carboxyl group-containing (co)polymer, which comprises a reaction step of (co)polymerizing, in the presence of a polymerization catalyst component, at least a functional group-containing olefin compound represented by the following general formula (1) and/or the following general formula (2) and a reaction termination step of terminating the (co)polymerization.

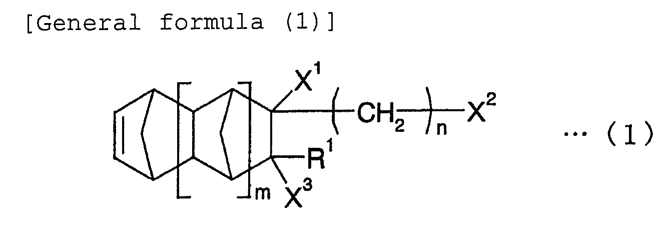

[In the general formula (1), X¹ X² and X³ are each independently a hydrogen atom, a hydrocarbon group having 1 to 10 carbon atoms, or a functional group represented by the following general formula (3). Provided that, at least one of X¹ X² and X³ is a functional group represented by the following general formula (3). R¹ is a hydrogen atom or a hydrocarbon group having 1 to 10 carbon atoms; m is an integer of 0 to 2; and n is an integer of 0 to 5.]

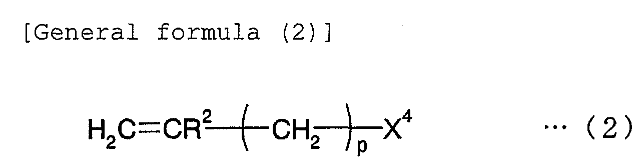

[In the general formula (2), X⁴ is a functional group represented by the following general formula (3). R² is a hydrogen atom or a hydrocarbon group having 1 to 10 carbon atoms; and p is an integer of 0 to 6.]

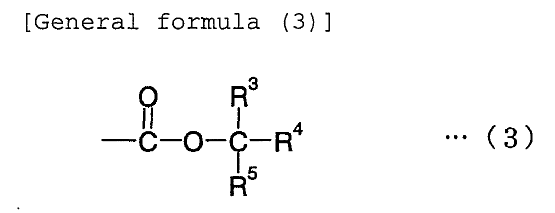

[In the general formula (3), R³, R⁴ and R⁵ are each independently an organic group or are each an organic group which is linked to each other to form a ring.]

[2] A process for producing a carboxyl group-containing (co)polymer, set forth in [1], wherein, in the reaction termination step, the (co)polymerization is terminated and carboxyl group is formed.

[3] A process for producing a carboxyl group-containing (co)polymer, set forth in [1] or [2], wherein the reaction step includes copolymerization of the functional group-containing olefin compound represented by the general formula (1) and/or the general formula (2), ethylene, an α-olefin having 3 to 12 carbon atoms and, when required, a non-conjugated polyene.

[4] A process for producing a carboxyl group-containing (co)polymer, set forth in any of [1] to [3], wherein the polymerization catalyst component comprises an organoaluminum compound and a vanadium compound.

[5] A process for producing a carboxyl group-containing (co)polymer, set forth in any of [1] to [4], wherein, when a functional group-containing olefin compound represented by the general formula (1) is used, X³ of is a functional group represented by the general formula (3), X¹ and X² are each a hydrogen atom, and n is 0 (zero), in the general formula (1).

[6] A process for producing a carboxyl group-containing (co)polymer, set forth in any of [1] to [5], wherein, in the general formula (3), R³, R⁴ and R⁵ are each independently a hydrocarbon group having 1 to 20 carbon atoms, or are each a hydrocarbon group having 1 to 20 carbon atoms which is linked to each other to form a ring.

[7] A process for producing a carboxyl group-containing (co)polymer, set forth in any of [1] to [6], wherein, when a functional group-containing olefin compound represented by the general formula (1) is used, R¹ is a methyl group in the general formula (1).

[8] A carboxyl group-containing (co)polymer which is produced by a process for producing a carboxyl group-containing (co)polymer, set forth in any of [1] to [7].

The process of the present invention for producing a carboxyl group-containing (co)polymer is simplified in production steps and can produce a carboxyl group-containing (co)polymer easily at a high yield. Furthermore, the carboxyl group-containing (co)polymer of the present invention can show such an effect that it is superior in adhesivity to and compatibility with other materials and can be used as an elastomer suitable for materials for such as automobile parts, machine parts, electronic parts and construction material for civil engineering.

### Brief Description of the Drawing

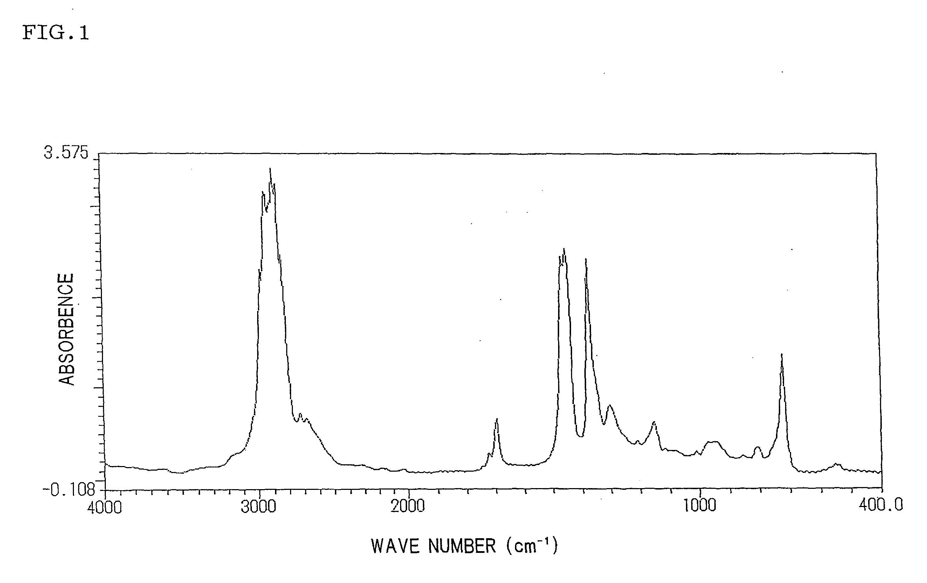

Fig. 1 is a graph showing the infrared absorption spectrum of the copolymer obtained in Example 1.

### Best Mode for Carrying Out the Invention

The best mode for carrying out the present invention is described below. However, the present invention is in no way restricted to the following mode and it should be construed that design modification, improvement, etc. can be appropriately made to the present invention based on the ordinary knowledge of those skilled in the art, as long as there is no deviation from the gist of the present invention. In the present specification, "(co)polymerization" means any of "copolymerization" and "polymerization".

One mode of the present invention is a process for producing a carboxyl group-containing (co)polymer, which comprises a reaction step of (co)polymerizing, in the presence of a polymerization catalyst component, at least a functional group-containing olefin compound represented by the following general formula (1) and/or the following general formula (2) and a reaction termination step of terminating the (co)polymerization.

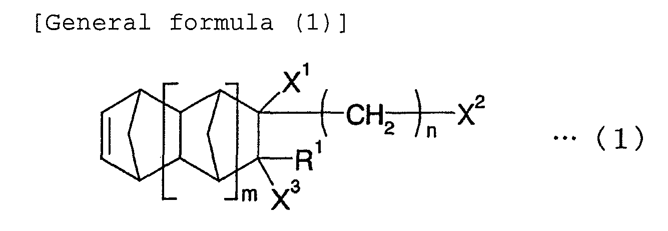

[In the general formula (1), X¹ X² and X³ are each independently a hydrogen atom, a hydrocarbon group having 1 to 10 carbon atoms, or a functional group represented by the following general formula (3). Provided that, at least one of X¹ X² and X³ is a functional group represented by the following general formula (3). R¹ is a hydrogen atom or a hydrocarbon group having 1 to 10 carbon atoms; m is an integer of 0 to 2; and n is an integer of 0 to 5.]

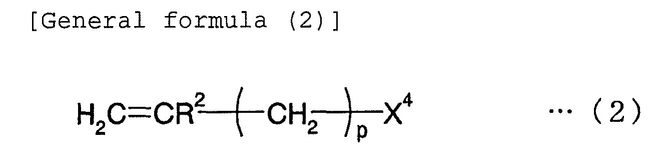

[In the general formula (2), X⁴ is a functional group represented by the following general formula (3). R² is a hydrogen atom or a hydrocarbon group having 1 to 10 carbon atoms; and p is an integer of 0 to 6.]

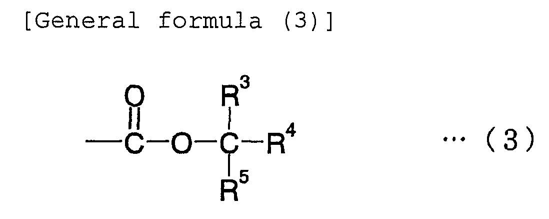

[In the general formula (3), R³, R⁴ and R⁵ are each independently an organic group or are each an organic group which is linked to each other to form a ring.]

The functional group-containing olefin compound represented by the general formula (1) and the functional group-containing olefin compound represented by the general formula (2) are each an ester compound obtained by a condensation reaction between a particular carboxylic acid and an alcohol or an addition reaction between a particular carboxylic acid and an olefin. Also, the functional group-containing olefin compound represented by the general formula (1) is an ester compound obtained by a various reactions such as Diels-Alder reaction or the like. These functional group-containing olefin compounds contain no carboxyl group; therefore, they dissolve easily in (co)polymerization organic solvents ordinarily used etc., hardly cause a heterogeneous reaction even in the production step of industrial level, and can be used preferably.

Further, since any of the functional group-containing olefin compound represented by the general formula (1) and the functional group-containing olefin compound represented by the general formula (2) contains no carboxyl group, when the compounds are used, there is no masking step for masking of carboxyl group, which has been necessary prior to the (co)polymerization. Thus, according to the production process of the present mode using the functional group-containing olefin compound(s), the number of the steps for producing a carboxyl group-containing (co)polymer is smaller and the production steps are simplified; therefore, a significant improvement in production efficiency can be expected.

When, in the process of the present mode for producing a carboxyl group-containing (co)polymer, there is used a functional group-containing olefin compound represented by the general formula (1), it is preferred in view of the copolymerization etc. of the compound with ethylene, α-olefin, etc. that, in the general formula (1), X³ is a functional group represented by the general formula (3), X¹ and X² are each a hydrogen atom, and n is 0 (zero). When, in the process of the present mode for producing a carboxyl group-containing (co)polymer, there is used a functional group-containing olefin compound represented by the general formula (1), it is also preferred in view of the superior durability of obtained (co)polymer etc. that, in the general formula (1), R¹ is a methyl group.

As specific examples of the functional group represented by the general formula (3), there can be mentioned alkoxycarbonyl groups represented by the following formulas (4) to (57). In addition, it is preferred that, in the general formula (3), R³, R⁴ and R⁵ are each independently a hydrocarbon group having 1 to 20 carbon atoms or are each a hydrocarbon group having 1 to 20 carbon atoms which is linked to each other to form a ring, because, with such a hydrocarbon group, there is substantially no inhibition of polymerization.

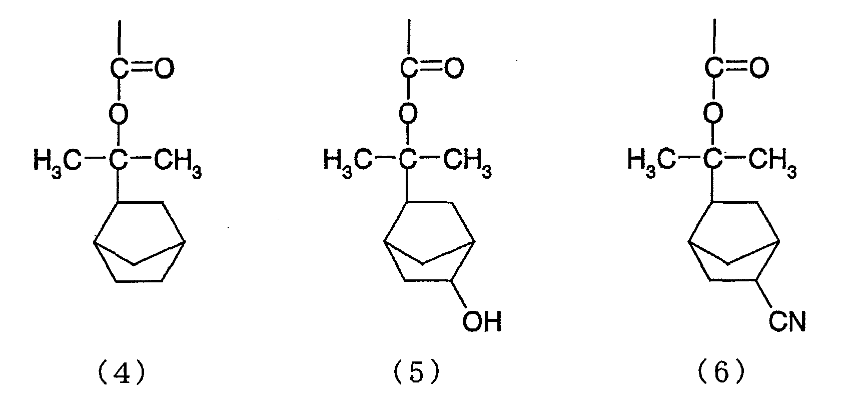

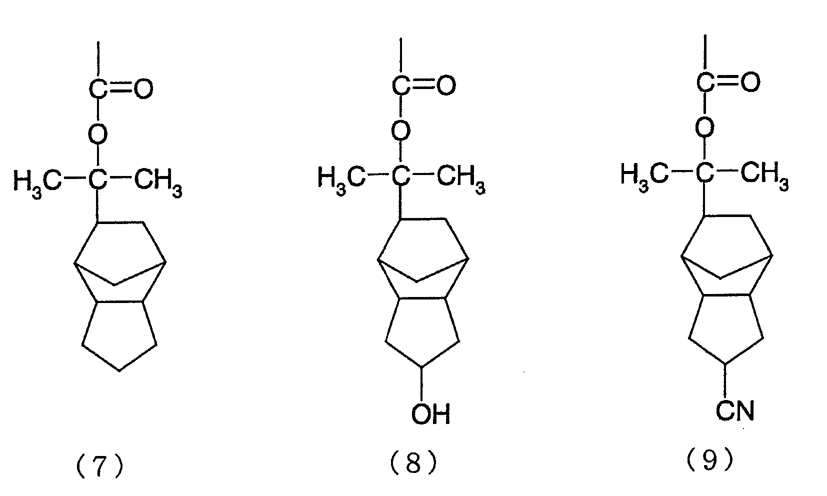

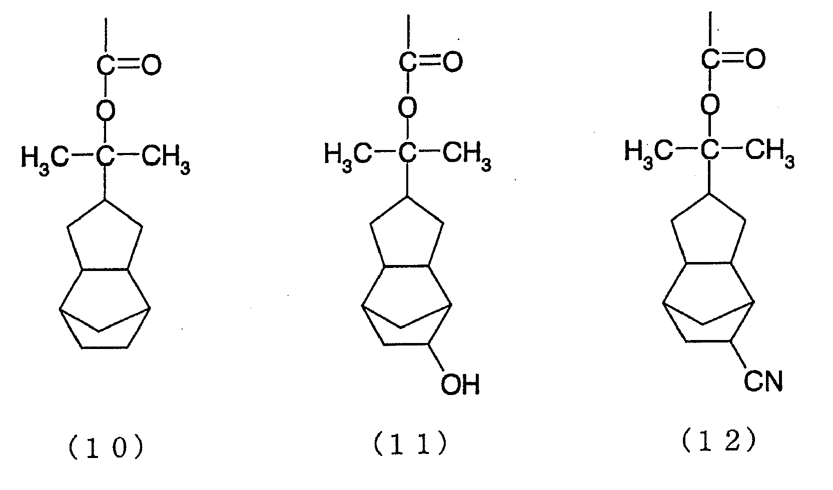

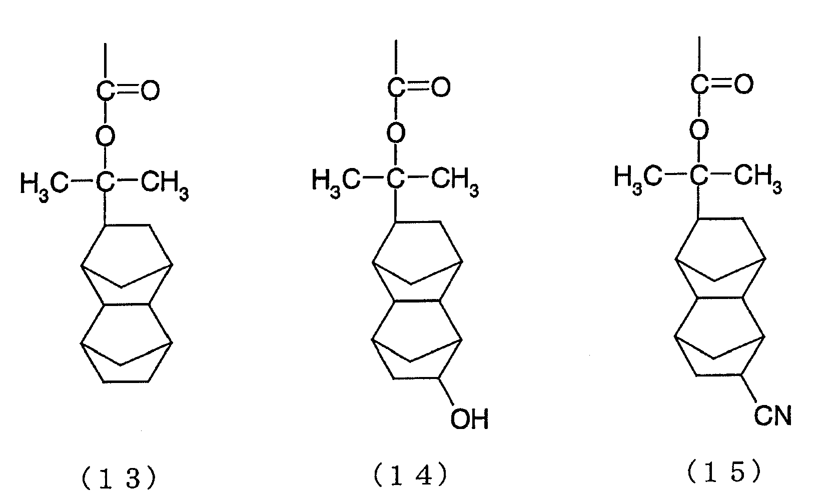

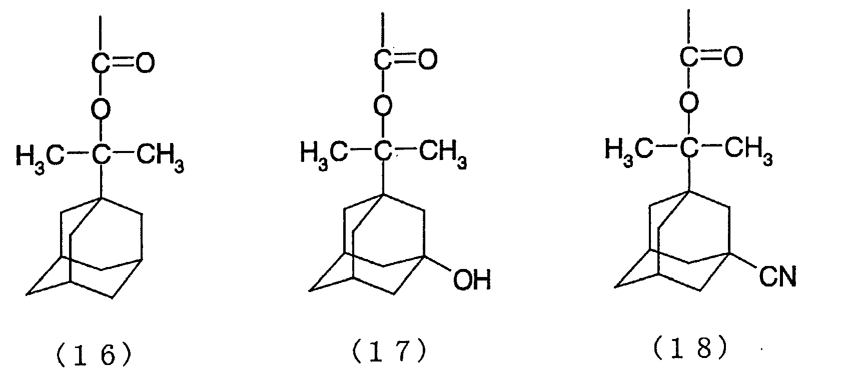

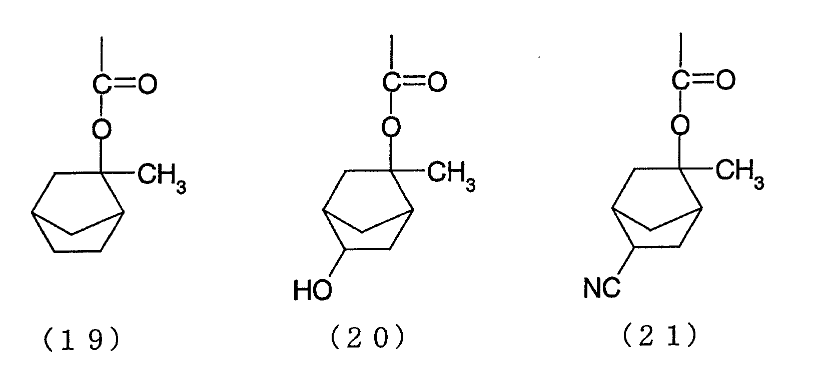

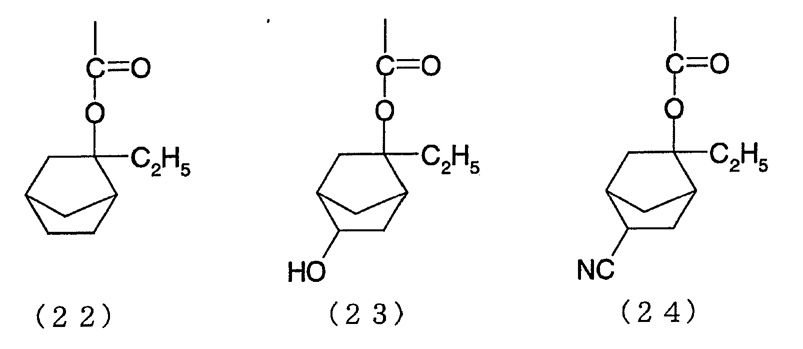

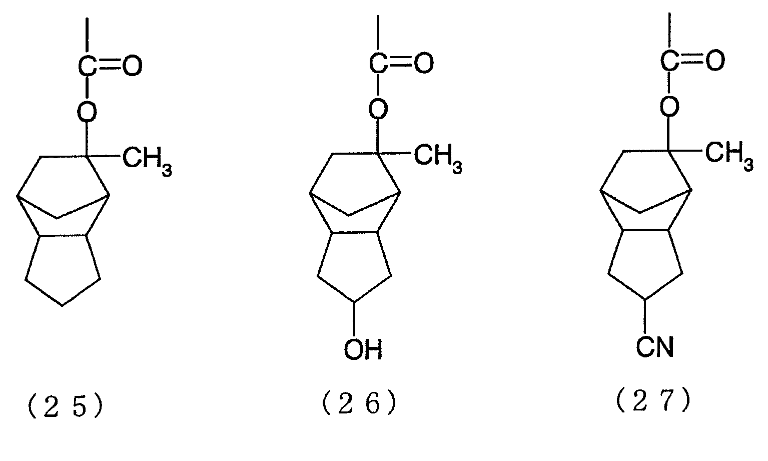

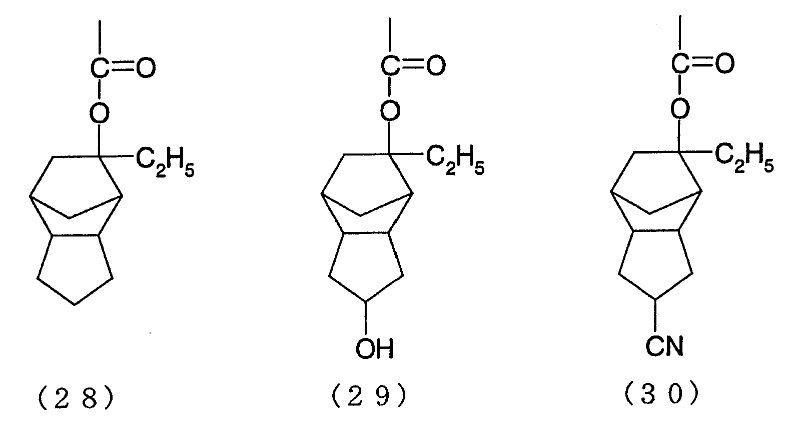

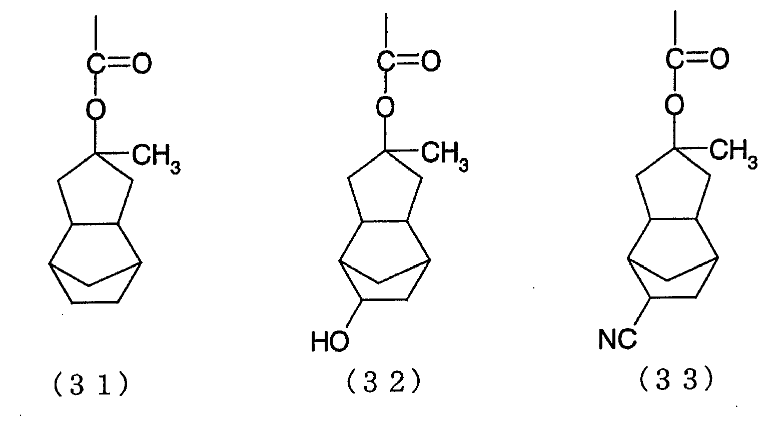

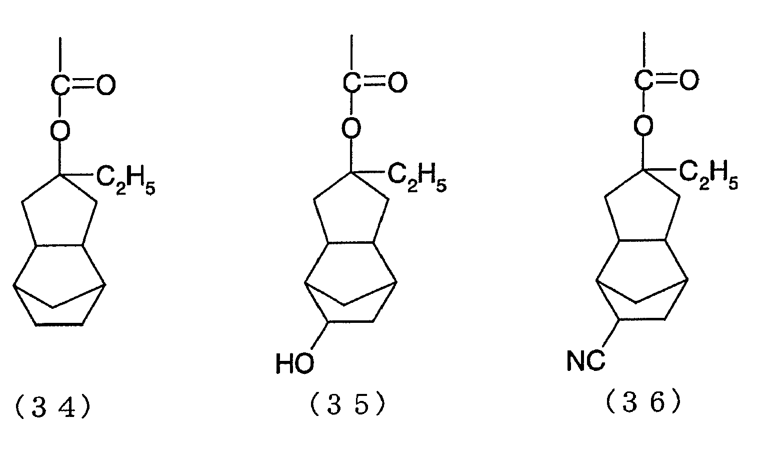

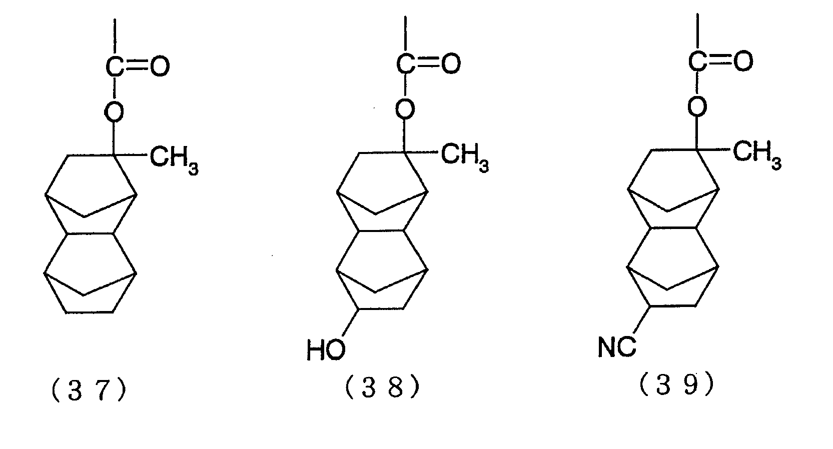

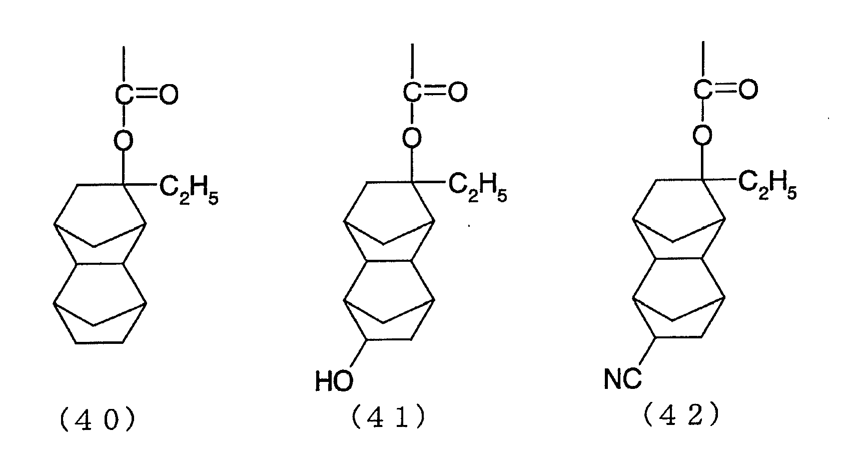

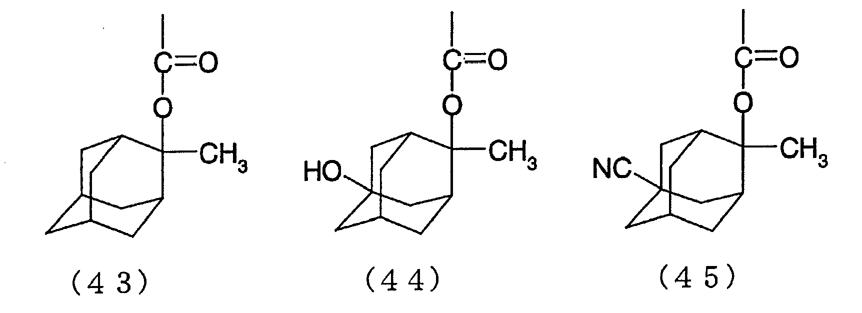

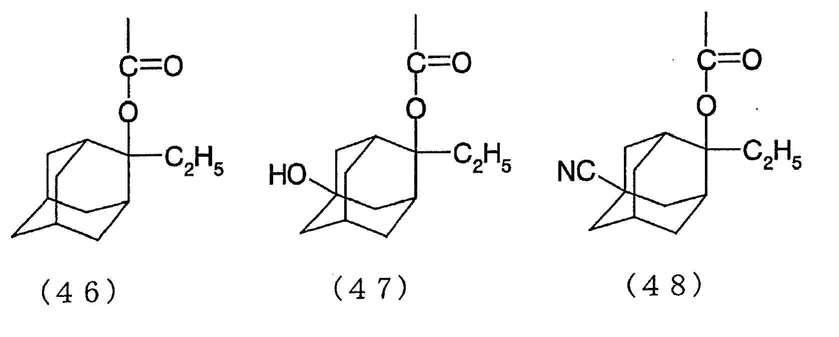

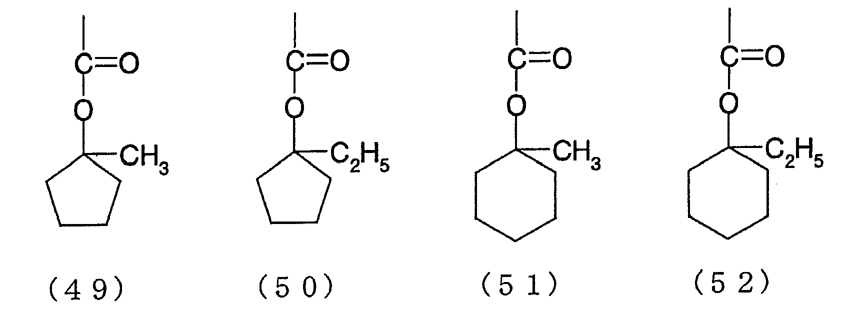

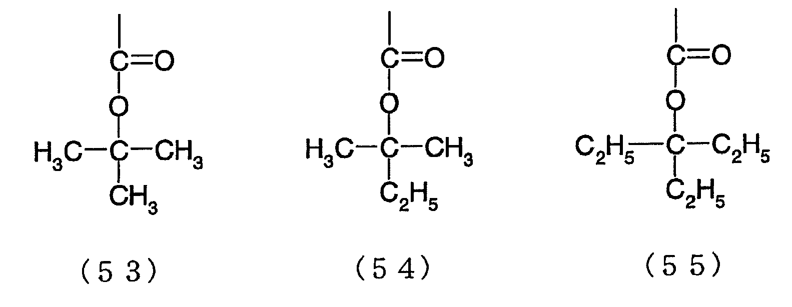

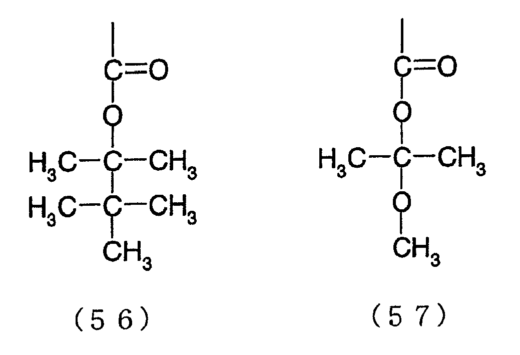

In the process of the present mode for producing a carboxyl group-containing (co)polymer, it is preferred that the reaction step includes copolymerization of the functional group-containing olefin compound represented by the general formula (1) and/or the general formula (2), ethylene, an α-olefin having 3 to 12 carbon atoms and, when required, a non-conjugated polyene.

When there is used the functional group-containing olefin compound represented by the general formula (1) and/or the general formula (2), the olefin compound of general formula (1) and/or general formula (2) is used so that the proportion of the structural unit derived from the functional group-containing olefin compound represented by the general formula (1) [this structural unit is hereinafter expressed also as "structural unit (a)"] and/or the structural unit derived from the functional group-containing olefin compound represented by the general formula (2) [this structural unit is hereinafter expressed also as "structural unit (b)"], in the total structural units of the carboxyl group-containing copolymer obtained becomes preferably 0.01 to 30 mol %, more preferably 0.05 to 10 mol %, particularly preferably 0.1 to 5 mol %. When there is used the functional group-containing olefin compound represented by the general formula (1) so that the proportion of the structural unit (a) becomes 30 mol % or less, the copolymerization between functional group-containing olefin compound and other olefin compounds (e.g. ethylene) tends to become better and the copolymer obtained tends to be superior in rubber elasticity. Meanwhile, when there is used the functional group-containing olefin compound represented by the general formula (1) so that the proportion of the structural unit (a) becomes 0.01 mol % or more, the copolymer obtained tends to be better in adhesivity, compatibility, coatability, etc. owing to the modification caused by functional group and further be superior in dynamic properties after conversion into ionomer etc. When there is used the functional group-containing olefin compound represented by the general formula (2) so that the proportion of the structural unit (b) becomes 30 mol % or less, the copolymerization between functional group-containing olefin compound and other olefin compounds (e.g. ethylene) tends to become better etc. Meanwhile, when there is used the functional group-containing olefin compound represented by the general formula (2) so that the proportion of the structural unit (b) becomes 0.01 mol % or more, the copolymer obtained tends to be better in adhesivity, compatibility, coatability, etc. owing to the modification caused by functional group and further be superior in dynamic properties after conversion into ionomer etc.

Ethylene is used so that the proportion of the structural unit derived from ethylene [this structural unit is hereinafter expressed also as "structural unit (c)], in the total structural units of the carboxyl group-containing copolymer obtained becomes preferably 5 to 90 mol %, more preferably 10 to 85 mol %, particularly preferably 15 to 80 mol %. By using ethylene so that the proportion of the structural unit (c) becomes 5 mol % or more, copolymerization of the functional group-containing olefin compounds represented by the general formula (1) and the general formula (2) tends to be easy and moreover an elastomer of superior durability tends to be obtained easily. Meanwhile, by using ethylene so that the proportion of the structural unit (c) becomes 90 mol % or less, a carboxyl group-containing copolymer functioning as an elastomer tends to be obtained easily.

The α-olefin needs to have 3 to 12 carbon atoms. As specific examples thereof, there can be mentioned propylene, 1-butene, 1-pentene, 4-methyl-pentene-1, 1-hexene, 1-heptene, 1-octene, 1-decene, 1-dodecene and cyclohexene. These α-olefins can be used singly or in combination of two or more kinds. Use of an α-olefin having 12 or less carbon atoms is preferred because its copolymerizability with other monomers tends to be better.

The α-olefin is used so that the proportion of the structural unit derived from the α-olefin [this structural unit is hereinafter expressed also as "structural unit (d)"], in the total structural units of the carboxyl group-containing copolymer obtained becomes preferably 5 to 60 mol %, more preferably 10 to 55 mol %, particularly preferably 15 to 50 mol %. By using the α-olefin so that the proportion of the structural unit (d) becomes 5 mol % or more, an elastomer having sufficient elasticity tends to be obtained easily. Meanwhile, by using the α-olefin so that the proportion of the structural unit (d) becomes 60 mol % or less, an elastomer having superior durability tends to be obtained easily.

As specific examples of the non-conjugated polyene, there can be mentioned straight chain, acyclic dienes such as 1,4-hexadiene, 1,6-octadiene, 1,5-hexadiene and the like; branched chain, acyclic dienes such as 5-methyl-1,4-hexadiene, 3,7-dimethyl-1,6-octadiene, 5,7-dimethyl-1,6-octadiene, 3,7-dimethyl-1,7-octadiene, 7-methyl-1,6-octadiene, dihydromyrcene and the like; and alicyclic dienes such as tetrahydroindene, methyltetrahydroindene, dicyclopentadiene, bicyclo[2.2.1]hepta-2,5-diene, 5-methylene-2-norbornene, 5-ethylidene-2-norbrnene, 5-propenyl-2-norbornene, 5-isopropylidene-2-norbornene, 5-cyclohexylidene-2-norbornene, 5-vinyl-2-norbornene etc., and the like. These non-conjugated polyenes can be used singly or in combination of two or more kinds. Of the above specific examples of the non-conjugated polyene, preferred are 1,4-hexadiene, 5-methylene-2-norbornene, 5-ethylidene-2-norbornene, etc.

The non-conjugated polyene is used so that the proportion of the structural unit derived from the non-conjugated polyene [this structural unit is hereinafter expressed also as "structural unit (e)"], in the total structural units of the carboxyl group-containing copolymer obtained becomes preferably 0 to 12 mol %, more preferably 0 to 8 mol %, particularly preferably 0 to 5 mol %. By using the non-conjugated polyene so that the proportion of the structural unit (e) becomes 12 mol % or less, an elastomer having superior durability tends to be obtained easily.

The reaction step is conducted preferably in the presence of an appropriate solvent or diluent. As such a solvent or diluent, there can be used, for example, an aliphatic hydrocarbon, an alicyclic hydrocarbon, an aromatic hydrocarbon, or a halide thereof. Specifically there can be mentioned butane, pentane, hexane, heptane, 2-butene, 2-methyl-2-butene, cyclopentane, methylcyclopentane, cyclohexane, isooctane, benzene, toluene, xylene, chlorobenzene, dichloromethane, dichloroethane, etc. These solvents or diluents are preferably used in such a state that the water content has been reduced to 20 ppm or lower by a distillation treatment or an adsorption treatment.

In the reaction step, (co)polymerization is conducted preferably at 0 to 150°C, more preferably at 10 to 100°C. In the (co)polymerization, a molecular weight modifier may be used as necessary. As specific examples of the molecular weight modifier, there can be mentioned hydrogen, diethyl zinc and diisobutyl aluminum hydride etc. In addition, the reactor for (co)polymerization may be any of batch type reactor and continuous type reactor. As the continuous type reactor, there can be used a tube type reactor, a column type reactor, a tank type reactor or the like.

In the reaction step, a polymerization catalyst component is used. As the polymerization catalyst component, there is preferably used one comprising an organoaluminum compound and a transition metal compound, preferably a compound containing a metal element selected from the group 4 or 5 of periodic table. The polymerization catalyst component is more preferred to comprise an organoaluminum compound and a vanadium compound. It is also preferred that the polymerization catalyst component is one which can produce, in the copolymerization of ethylene, α-olefin and non-conjugated polyene, a copolymer wherein individual structural units are arranged relatively at random. As specific polymerization catalyst components, there can be mentioned the following polymerization catalyst components (1) to (4).

### [Polymerization catalyst component (1)]

This is a polymerization catalyst component comprising an organoaluminum compound soluble in hydrocarbon compounds and a vanadium compound, wherein either or both of the organoaluminum compound and the vanadium compound contain at least one chlorine atom.

As the vanadium compound, there can be mentioned compounds represented by the following general formula (58), VC1₄, VO(acac)₂, V(acac)₃ ("acac" indicates acetylacetonato group) and compounds represented by the following general formula (59) etc.

O=VClₖ(OR⁴)₃₋ₖ (58)

[In the general formula (58), R⁴ is a hydrocarbon group such as ethyl group, propyl group, butyl group, hexyl group or the like; and k is an integer of 0 to 3.]

VCl₃·mZ (59)

[In the general formula (59), Z is a Lewis base capable of forming a complex soluble in hydrocarbon compounds such as tetrahydrofuran, 2-methyl-tetrahydrofuran, 2-methoxymethyl-tetrahydrofuran, dimethylpyridine and the like; and m is an integer of 2 to 3.]

As the organoaluminum compound, there can be mentioned trialkyl aluminum compounds represented by the following general formula (60); alkyl aluminum hydrides represented by the following general formula (61) or the following general formula (62); alkyl aluminum chlorides represented by the following general formula (63), the following general formula (64) or the following general formula (65); alkoxy- or phenoxy-substituted organoaluminums represented by the following general formula (66) or the following general formula (67); and methyl alumoxane (MAO), ethyl alumoxane, butyl alumoxane, obtained by a reaction between water and the above-mentioned trialkyl aluminum compound, and the like.

AlR⁵₃ (60)

HAlR⁵₂ (61)

H₂AlR⁵₃ (62)

R⁵AlCl₂ (63)

R⁵₃Al₂Cl₃ (64)

R⁵₂AlCl (65)

R⁵₂Al (OR⁶) (66)

R⁵Al (OR⁶)₂ (67)

[In the above general formulas (60) to (67), R⁵ is a hydrocarbon group such as methyl group, ethyl group, propyl group, butyl group, hexyl group or the like; and R⁶ is methyl group, ethyl group, butyl group, phenyl group, tolylxylyl group, 2,6-di-tert-butylphenyl group, 4-methyl-2,6-di-tert-butylphenyl group, 2,6-dimethylphenyl group or 4-methyl-2,6-dimethylphenyl group.]

In the polymerization catalyst component (1), in addition to the organoaluminum compound and the vanadium compound, an oxygen- or nitrogen-containing electron donor such as organic acid ester or inorganic acid ester, ether, amine, ketone, alkoxysilane or the like can be added.

### [Polymerization catalyst component (2)]

This is a polymerization catalyst component comprising a titanium halide or a zirconium halide, supported on silica or magnesium chloride, and an organoaluminum compound.

As the titanium halide or the zirconium halide, there can be used titanium tetrachloride, titanium tetrabromide, zirconium tetrachloride or the like. As the organoaluminum compound, there can be used trimethyl aluminum, triethyl aluminum, triisobutyl aluminum, methyl alumoxane or the like. The polymerization catalyst component (2) can further comprise dioctyl phthalate, tetraalkoxysilane, diphenyldimethoxysilane or the like.

### [Polymerization catalyst component (3)]

This is a polymerization catalyst component comprising of an organoaluminum compound containing methylalumoxane in an amount of 50 ml % or more and a transition metal compound containing at least one transition metal selected from the group consisting of titanium, zirconium and hafnium, the transition metal compound having, as a ligand, one or two cyclopentadienyl or indenyl groups having at least one substituent group selected from the group consisting of hydrogen atom, alkyl group and allyl group.

As specific examples of the transition metal compound, there can be mentioned bis(cyclopentadienyl) dimethyl zirconium, bis(cyclopentadienyl) diethyl zirconium, bis(cyclopentadienyl) methyl zirconium monochloride, ethylene bis(cyclopentadienyl) zirconium dichloride, ethylene bis(cyclopentadienyl) methyl zirconium monochloride, methylene bis(cyclopentadienyl) zirconium dichloride, ethylene bis(indenyl) zirconium dichloride, ethylene bis(indenyl) dimethyl zirconium, ethylene bis(indenyl)diphenyl zirconium, ethylene bis(4,5,6,7-tetrahydro-1-indenyl) dimethyl zirconium, ethylene bis(4-methyl-1-indenyl) zirconium dichloride, ethylene bis(2,3-dimethyl-1-indenyl) zirconium dichloride, dimethylsilyl bis(cyclopentadienyl) zirconium dichloride, dimethylsilyl bis(indenyl) zirconium dichloride, dimethylsilyl bis(dimethylcyclopentadienyl) zirconium dichloride, dimethyl methyl (fluorenyl) (cyclopentadienyl) zirconium dichloride, diphenyl methyl (fluorenyl) (cyclopentadienyl) zirconium dichloride, diphenylsilyl bis(indenyl) zirconium dichloride, dimethylsilyl bis(2-methyl-4-phenyl-indenyl) zirconium dichloride, bis(cyclopentadienyl) dimethyl titanium, bis(cyclopentadienyl) methyl titanium monochloride, ethylene bis(indenyl) titanium dichloride, ethylene bis(4,5,6,7-tetrahydro-1-indenyl) titanium dichloride, methylene bis(cyclopentadienyl) titanium dichloride, η¹: η⁵-{[(tert-butyl-amide)dimethylsilyl] (2,3,4,5-tetramethyl-1-cyclopentadienyl)} titanium dichloride, and bis(1,1,1-trifluoro-3-phenyl-2,4-butadionato) titanium dichloride, and the like.

### [Polymerization catalyst component (4)]

This is a catalyst comprising a bisalkyl- or N-alkylsubstituted salicylaldimine, a dichloride of titanium, zirconium or hafnium, and methyl alumoxane (MAO).

After, in the reaction step of the process of the present mode for producing a carboxyl group-containing (co)polymer, (co)polymerization of monomer(s) has been conducted in the presence of the above-mentioned polymerization catalyst component, the (co)polymerization is terminated in the reaction termination step. In order to terminate the (co)polymerization, there is preferably used, as a polymerization terminator, a polar compound such as water, alcohol, acid, ester, ketone, ether, amine or the like.

After the termination of (co)polymerization, the (co)polymerization product is contacted with an appropriate treating agent, to subject, to demasking, the carboxyl group formed in the (co)polymerization and masked by the polymerization catalyst, whereby an intended, carboxyl group-containing (co)polymer can be obtained. As the treating agent, there can be used an acid of relatively high acidity or a chelate compound. As specific examples of the acid of relatively high acidity, there can be mentioned hydrochloric acid, formic acid, oxalic acid, fumaric acid, lactic acid, dioctylmonophosphoric acid, trifluoroacetic acid, dodecylbenzenesulfonic acid, methylphosphoric acid, ethylphosphoric acid, propylphosphoric acid, isopropylphosphoric acid, butylphosphoric acid, 2-ethylhexylphsoshoric acid, butoxyethylphosphoric acid, monophosphoric acid ester of nonylphenoxypolyethylene glycol, diphosphoric acid ester of nonylphenoxypolyethylene glycol, monophosphoric acid ester of lauroxypolyethylene glycol, and diphosphoric acid ester of lauroxypolyethylene glycol, and the like.

As specific examples of the chelate compound, there can be mentioned acetylacetone, methyl acetoacetate, ethyl acetoacetate, acetoacetic anilide, acetoacetic m-xylidide, acetoacetic o-chloroanilide and acetoacetic toluidide, and the like.

An intended, carboxyl group-containing (co)polymer can be obtained also by treating the polymerization product formed in the (co)polymerization of the reaction step, with an acid such as hydrochloric acid, oxalic acid, lactic acid, methylphosphoric acid, ethylphosphoric acid, propylphosphoric acid, isopropylphosphoric acid, butylphosphoric acid, 2-ethylhexylphosphoric acid, butoxyethylphosphoric acid or the like, or with a chelate compound such as acetylacetone, methyl acetoacetate, ethyl acetoacetate, acetoacetic anilide, acetoacetic m-xylidide, acetoacetic o-chloroanilide, acetoacetic toluidide or the like. In this case, the (co)polymerization is terminated and, at the same time, the carboxyl group formed in the (co)polymerization and masked by the polymerization catalyst is subjected to demasking, whereby carboxyl group is formed.

In the state that the (co)polymerization has been terminated, the intended, carboxyl group-containing (co)polymer can be obtained as a solution of a (co)polymer in the state dissolved in the solvent (or diluent) used in the reaction. In the present mode, it is preferred that the thus-obtained (co)polymer solution is passed through an adsorption column filled with silica, alumina, diatomaceous earth or the like, or a large amount of water, an acidic solution, an alcohol or the like is added to the (co)polymer solution to wash the (co)polymer solution, whereby the polymerization catalyst component, treating agent, etc. remaining in the (co)polymer solution are removed.

It is also preferred to add, to the (co)polymer solution, a known anti-oxidant of phenol type, phosphorus type, sulfur type or the like because the carboxyl group-containing (co)polymer obtained can have higher stability.

Steam is blown into the polymer solution to remove the solvent and obtain a slurry; a solid is separated from the slurry; the solid is dehydrated and dried using a screw type squeezer, an extruder, a hot roll or the like; thereby, a solid, carboxyl group-containing (co)polymer can be obtained (isolated). A solid, carboxyl group-containing (co)polymer can be obtained (isolated) also by heating the polymer solution for concentration and then drying the concentrate using a vented extruder.

Next, one mode of the carboxyl group-containing (co)polymer of the present invention is described. The carboxyl group-containing (co)polymer of the present mode is produced by the above-mentioned mode of the process of the present invention for producing a carboxyl group-containing (co)polymer. Therefore, the carboxyl group-containing (co)polymer of the present mode has advantages in that it is superior in adhesivity to and compatibility with other materials and can be used as an elastomer suitable for materials for such as automobile parts, machine parts, electronic parts and construction material for civil engineering.

There is considered a case that, in the above-mentioned reaction step, there are copolymerized a functional group-containing olefin compound represented by the general formula (1) and/or the general formula (2), ethylene, an α-olefin having 3 to 12 carbon atoms and, as necessary, a non-conjugated polyene. In this case, when there is used the functional group-containing olefin compound represented by the general formula (1), the olefin compound of general formula (1) is used so that the proportion of the structural unit (a) in the total structural units of the carboxyl group-containing copolymer of the present mode becomes preferably 0.01 to 30 mol %, more preferably 0.05 to 10 mol %, particularly preferably 0.1 to 5 mol %. When there is used the functional group-containing olefin compound represented by the general formula (1) so that the proportion of the structural unit (a) becomes 30 mol % or less, the copolymerization between functional group-containing olefin compound and other olefin compounds (e.g. ethylene) tends to become better and the copolymer obtained tends to be superior in rubber elasticity. Meanwhile, when there is used the functional group-containing olefin compound represented by the general formula (1) so that the proportion of the structural unit (a) becomes 0.01 mol % or more, the copolymer obtained tends to be better in adhesivity, compatibility, coatability, etc. owing to the modification caused by functional group and further be superior in dynamic properties after conversion into ionomer, and the like.

When there is used the functional group-containing olefin compound represented by the general formula (2), the olefin compound of general formula (2) is used so that the proportion of the structural unit (b) in the total structural units of the carboxyl group-containing copolymer of the present mode becomes preferably 0.01 to 30 mol %, more preferably 0.05 to 10 mol %, particularly preferably 0.1 to 5 mol %. When there is used the functional group-containing olefin compound represented by the general formula (2) so that the proportion of the structural unit (b) becomes 30 mol % or less, the copolymerization between functional group-containing olefin compound and other olefin compounds (e.g. ethylene) tends to become better, and the like. Meanwhile, when there is used the functional group-containing olefin compound represented by the general formula (2) so that the proportion of the structural unit (b) becomes 0.01 mol % or more, the copolymer obtained tends to be better in adhesivity, compatibility, coatability, etc. owing to the modification caused by functional group and further be superior in dynamic properties after conversion into ionomer, and the like.

The proportion of the structural unit (c) in the total structural units of the carboxyl group-containing copolymer of the present mode is preferably 5 to 90 mol %, more preferably 10 to 85 mol %, particularly preferably 15 to 80 mol %. When the proportion of the structural unit (c) is 5 mol % or more, an elastomer of superior durability tends to be obtained easily. Meanwhile, when the proportion of the structural unit (c) is 90 mol % or less, the carboxyl group-containing copolymer obtained tends to function as an elastomer.

The proportion of the structural unit (d) in the total structural units of the carboxyl group-containing copolymer of the present mode is preferably 5 to 60 mol %, more preferably 10 to 55 mol %, particularly preferably 15 to 50 mol %. When the proportion of the structural unit (d) is 5 mol % or more, an elastomer having sufficient elasticity tends to be obtained easily. Meanwhile, when the proportion of the structural unit (d) is 60 mol % or less, an elastomer having superior durability tends to be obtained easily.

The proportion of the structural unit (e) in the total structural units of the carboxyl group-containing copolymer of the present mode is preferably 0 to 12 mol %, more preferably 0 to 8 mol %, particularly preferably 0 to 5 mol %. When the proportion of the structural unit (e) is 12 mol % or less, an elastomer having superior durability tends to be obtained easily.

### Examples

The present invention is described specifically below by way of Examples. However, the present invention is in no way restricted to these Examples.

### (Synthesis Example 1 (synthesis of ester compound))

In a 500-ml, three-necked flask sufficiently purged with nitrogen were placed 54.6 g (0.25 mol) of 4-methyltetracyclo[6.2.1.1^{3,6},0^{2,7}]dodec-9-ene-4-carboxylic acid and 250 ml of dried toluene. Thereto was dropwise added, slowly at 0 to 10°C, 44.0 ml (0.31 mol) of trifluoroacetic anhydride. After the completion of the dropwise addition, the mixture was stirred at room temperature for 1 hour. Then, 48.8 ml (0.50 mol) of dried tert-butanol was dropwise added slowly at 0 to 10°C. After the completion of the dropwise addition, the mixture was stirred at room temperature for 2 hours. Then, the reaction mixture was cooled to 0°C, followed by addition of 250 ml of an aqueous solution containing 2 mol/l of sodium hydroxide and 250 ml of water for layer separation. The aqueous layer was extracted with 250 ml of diethyl ether two times, after which the organic layer was washed with 150 ml of water three times. The organic layer was dried over anhydrous sodium sulfate and subjected to distill off the solvent. The residue was subjected to purify by the vacuum distillation at 130 to 135°C at 3 mmHg, to obtain 47.3 g of tert-butyl 4-methyltetracyclo[6.2.1.1^{3,6},0^{2,7}]dodec-9-ene-4-carboxylate of colorless liquid state.

### (Example 1)

In a 2-liter separable flask purged with nitrogen were placed 1,000 ml of hexane (a solvent), 3.5 ml of a hexane solution containing 1.0 mol/l of tert-butyl 4-methyltetracyclo[6.2 .1.1^{3,6},0^{2,7}]dodec-9-ene-4-carboxylate, and 2 ml of 5-ethylidene-2-norbornene. Thereto was fed, continuously at 20°C, a mixed gas of ethylene (feeding rate: 5.0 1/min), propylene (feeding rate: 4.5 1/min) and hydrogen (feeding rate: 1.5 1/min). 5 minutes later, 3.66 ml of a hexane solution containing 0.32 mol/l of VOCl₃ was added into the 2-liter separable flask. After 5 minutes therefrom, 15.4 ml of a hexane solution containing 0.41 mol/l of Al₂ (C₂H₅)₃Cl₃ was added into the 2-liter separable flask, and addition polymerization of monomers was initiated. The polymerization was conducted at 25°C for 10 minutes. Then, 4.3 ml of acetylacetone was added to the reaction system to terminate the polymerization to obtain a polymer solution. To the polymer solution was added 41 ml of a 10% aqueous sulfuric acid solution; the polymer solution was washed with 500 ml of water; then, the polymer solution was poured into a large amount of methanol to separate out a copolymer. The copolymer was vacuum-dried to obtain 29.0 g of a white copolymer.

The copolymer was analyzed by infrared spectrophotometry, whereby an absorption derived from tert-butyl ester was seen at 1,724 cm⁻¹ and an absorption derived from carboxyl group was seen at 1,697 cm⁻¹. The infrared absorption spectrum of the copolymer is shown in Fig. 1. In addition, the proportion of the structural unit derived from ethylene was 70.0 mol %, the proportion of the structural unit derived from propylene was 29.2 mol %, the proportion of the structural unit derived from 5-ethylidene-2-norbornene was 0.52 mol %, the proportion of the structural unit derived from tert-butyl 4-methyltetracyclo [6.2.1.1^{3,6,}0^{2,7}]dodec-9-ene-4-carboxylate was 0.036 mol %, and the proportion of the structural unit derived from 4-methyltetracyclo[6.2.1.1^{3,6},0^{2,7}]dodec-9-ene-4-carboxylic acid (which was formed by hydrolysis of tert-butyl 4-methyltetracyclo [6.2.1.1^{3,6},0^{2,7}] dodec-9-ene-4-carboxylate)was 0.23 mol %. The polystyrene-reduced weight-average molecular weight (Mw) of the copolymer, as measured by gel permeation chromatography using o-dichlorobenzene as a solvent was 23.7x10⁴ and the Mw/Mn of the copolymer was 2.3. In addition, the proportions of individual structural units were measured using a Fourier transform infrared spectrophotometer.

### (Example 2)

56.3 g of a white copolymer was obtained in the same manner as in Example 1 except that the polymerization time was changed to 30 minutes. The copolymer was analyzed by infrared spectrophotometry, whereby no absorption derived from tert-butyl ester was seen at 1,724 cm⁻¹ and an absorption derived from carboxyl group was seen at 1,697 cm⁻¹. In addition, the proportion of the structural unit derived from ethylene was 75.5 mol %, the proportion of the structural unit derived from propylene was 24.0 mol %, the proportion of the structural unit derived from 5-ethylidene-2-norbornene was 0.28 mol %, and the proportion of the structural unit derived from 4-methyltetracyclo[6.2.1.1^{3,6},0^{2,7}]dodec-9-ene-4-carboxylic acid (which was formed by hydrolysis of tert-butyl 4-methyltetracyclo[6.2 .1.1^{1,6},0^{2,7}]dodec-9-ene-4-carboxylate) was 0.19 mol %. The polystyrene-reduced weight-average molecular weight (Mw) of the copolymer, as measured by gel permeation chromatography using o-dichlorobenzene as a solvent was 31.4x10⁴ and the Mw/Mn of the copolymer was 2.9.

### (Example 3)

26.6 g of a white copolymer was obtained in the same manner as in Example 1 except that the tert-butyl 4-methyltetracyclo[6.2.1.1^{3,6},0^{2,7}]dodec-9-ene-4-carboxylate was changed to tert-amyl 4-methyltetracyclo[6.2.1.1^{3,6},0^{2,7}]dodec-9-ene-4-carboxylate and the volume of the hexane solution of VOCl₃ was changed to 5.47 ml, and the volume of the hexane solution of Al₂(C₂H₅)₃Cl₃ was changed to 10.2 ml. The copolymer was analyzed by infrared spectrophotometry, whereby no absorption derived from tert-amyl ester was seen and an absorption derived from carboxyl group was seen. In addition, the proportion of the structural unit derived from ethylene was 71.64 mol %, the proportion of the structural unit derived from propylene was 26.83 mol %, the proportion of the structural unit derived from 5-ethylidene-2-norbornene was 1.20 mol %, and the proportion of the structural unit derived from 4-methyltetracyclo[6.2.1.1^{3,6},0^{2,7}]dodec-9-ene-4-carboxylic acid (which was formed by hydrolysis of tert-amyl 4-methyltetracyclo[6.2.1.1^{3,6},0^{2,7}]dodec-9-ene-4-carboxylate) was 0.33 mol %. The polystyrene-reduced weight-average molecular weight (Mw) of the copolymer, as measured by gel permeation chromatography using o-dichlorobenzene as a solvent was 17.5×10⁴ and the Mw/Mn of the copolymer was 2.7.

### (Example 4)

31.6 g of a white copolymer was obtained in the same manner as in Example 3 except that the tert-amyl 4-methyltetracyclo[6.2.1.1^{3,6},0^{2,7}]dodec-9-ene-4-carboxylate was changed to 1-methylcyclopentyl 4-methyltetracyclo[6.2.1.1^{3,6},0^{2,7}]dodec-9-ene-4-carboxylate. The copolymer was analyzed by infrared spectrophotometry, whereby no absorption derived from 1-methylcyclopentyl ester was seen and an absorption derived from carboxyl group was seen. In addition, the proportion of the structural unit derived from ethylene was 69.8 mol %, the proportion of the structural unit derived from propylene was 29.3 mol %, the proportion of the structural unit derived from 5-ethylidene-2-norbornene was 0.59 mol %, and the proportion of the structural unit derived from 4-methyltetracyclo[6.2.1.1^{3,6},0^{2,7}]dodec-9-ene-4-carboxylic acid (which was formed by hydrolysis of 1-methylcyclopentyl 4-methyltetracyclo[6.2.1.1^{3,6},0^{2,7}]dodec-9-ene-4-carboxylate) was 0.29 mol %. The polystyrene-reduced weight-average molecular weight (Mw) of the copolymer, as measured by gel permeation chromatography using o-dichlorobenzene as a solvent was 19.2x10⁴ and the Mw/Mn of the copolymer was 2.7.

### (Example 5)

33.6 g of a white copolymer was obtained in the same manner as in Example 3 except that the tert-amyl 4-methyltetracyclo[6.2.1.1^{3,6},0^{2,7}]dodec-9-ene-4-carboxylate was changed to tert-butyl tetracyclo[6.2.1.1^{3,6},0^{2,7}]dodec-9-ene-4-carboxylate. The copolymer was analyzed by infrared spectrophotometry, whereby an absorption derived from tert-butyl ester was seen at 1,728 cm⁻¹ and an absorption derived from carboxyl group was seen at 1,705 cm⁻¹. In addition, the proportion of the structural unit derived from ethylene was 72.6 mol %, the proportion of the structural unit derived from propylene was 25.8 mol %, the proportion of the structural unit derived from 5-ethylidene-2-norbornene was 1.32 mol %, the proportion of the structural unit derived from tert-butyl tetracyclo[6.2.1.1^{3,6},0^{2,7}]dodec-9-ene-4-carboxylate was 0.096 mol %, and the proportion of the structural unit derived from tetracyclo[6.2.1.1^{3,6},0^{2,7}]dodec-9-ene-4-carboxylic acid (which was formed by hydrolysis of tert-butyl tetracyclo[6.2.1.1^{3,6},0^{2,7}]dodec-9-ene-4-carboxylate) was 0.13 mol %. The polystyrene-reduced weight-average molecular weight (Mw) of the copolymer, as measured by gel permeation chromatography using o-dichlorobenzene as a solvent was 19.0x10⁴ and the Mw/Mn of the copolymer was 2.7.

### (Example 6)

17.1 g of a white copolymer was obtained in the same manner as in Example 3 except that the tert-butyl 4-methyltetracyclo [6.2. 1.1^{3,1},0^{2,7}] dodec-9-ene-4-carboxylate was changed to tert-butyl 2-methylbicyclo[2.2.1]hept-5-ene-2-carboxylate. The copolymer was analyzed by infrared spectrophotometry, whereby an absorption derived from tert-butyl ester was seen at 1,724 cm⁻¹ and an absorption derived from carboxyl group was seen at 1,697 cm⁻¹. In addition, the proportion of the structural unit derived from ethylene was 72.2 mol %, the proportion of the structural unit derived from propylene was 24.9 mol %, the proportion of the structural unit derived from 5-ethylidene-2-norbornene was 2.71 mol %, the proportion of the structural unit derived from tert-butyl 2-methylbicyclo[2.2.1]hept-5-ene-2-carboxylate was 0.069 mol %, and the proportion of the structural unit derived from 2-methylbicyclo[2.2.1]hept-5-ene-2-carboxylic acid (which was formed by hydrolysis of tert-butyl 2-methylbicyclo[2.2.1]hept-5-ene-2-carboxylate) was 0.085 mol %. The polystyrene-reduced weight-average molecular weight (Mw) of the copolymer, as measured by gel permeation chromatography using o-dichlorobenzene as a solvent was 15.0x10⁴ and the Mw/Mn of the copolymer was 2.4.

### (Comparative Example 1)

29.0 g of a white copolymer was obtained in the same manner as in Example 1 except that the tert-butyl 4-methyltetracyclo[6.2.1.1^{3,6},0^{2,7}]dodec-9-ene-4-carboxylate was changed to methyl 4-methyltetracyclo[6.2.1.1^{3,6},0^{2,7}]dodec-9-ene-4-carboxylate. The copolymer was analyzed by infrared spectrophotometry, whereby an absorption derived from methyl ester was seen at 1,735 cm⁻¹ but no absorption derived from carboxyl group was seen.

### (Comparative Example 2)

15.7 g of a white copolymer was obtained in the same manner as in Example 1 except that the tert-butyl 4-methyltetracyclo[6.2.1.1^{3,6},0²,⁷]dodec-9-ene-4-carboxylate was changed to isopropyl 4-methyltetracyclo[6.2.1.1^{3,6},0^{2,7}]dodec-9-ene-4-carboxylate. The copolymer was analyzed by infrared spectrophotometry, whereby an absorption derived from isopropyl ester was seen at 1,730 cm⁻¹ but no absorption derived from carboxyl group was seen.

### (Comparative Example 3)

15.5 g of a white copolymer was obtained in the same manner as in Example 1 except that the tert-butyl 4-methyltetracyclo[6.2.1.1^{3,6}, 0^{2,7}]dodec-9-ene-4-carboxylate was changed to cyclopentyl 4-methyltetracyclo[6.2.1.1^{3,6},0^{2,7}]dodec-9-ene-4-carboxylate. The copolymer was analyzed by infrared spectrophotometry, whereby an absorption derived from cyclopentyl ester was seen at 1,730 cm⁻¹ but no absorption derived from carboxyl group was seen.

### (Reference Example)

5.0 g of the copolymer obtained in Example 1 was dissolved in 100 ml of toluene. 5 ml of a 10% aqueous sulfuric acid solution was added thereto. The mixture was refluxed with heating, for 3 hours and then was poured into a large amount of methanol to separate out a copolymer. The copolymer was vacuum-dried to obtain 4.8 g of a white copolymer. The copolymer was analyzed and it was confirmed that there was no change in the proportion of the structural unit derived from tert-butyl 4-methyltetracyclo[6.2.1.1^{3,6},0^{2,7}]dodec-9-ene-4-carboxylate and there was no hydrolysis of tert-butyl ester by sulfuric acid.

### Industrial Applicability

The carboxyl group-containing (co)polymer of the present invention is suitable for obtaining an elastomer for materials for such as automobile parts, machine parts, electronic parts and construction material for civil engineering.

## Claims

1. A process for producing a carboxyl group-containing (co)polymer, which comprises a reaction step of (co)polymerizing, in the presence of a polymerization catalyst component, at least a functional group-containing olefin compound represented by the following general formula (1) and/or the following general formula (2) and a reaction termination step of terminating the (co)polymerization. 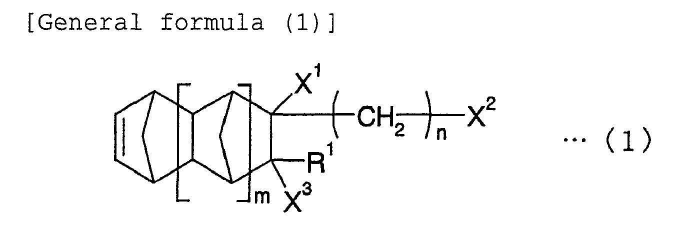 [In the general formula (1), X¹ X² and X³ are each independently a hydrogen atom, a hydrocarbon group having 1 to 10 carbon atoms, or a functional group represented by the following general formula (3). Provided that, at least one of X¹ X² and X³ is a functional group represented by the following general formula (3). R¹ is a hydrogen atom or a hydrocarbon group having 1 to 10 carbon atoms; m is an integer of 0 to 2; and n is an integer of 0 to 5.] 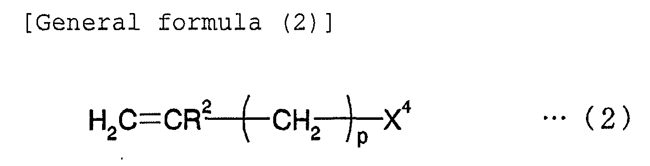 [In the general formula (2), X⁴ is a functional group represented by the following general formula (3). R² is a hydrogen atom or a hydrocarbon group having 1 to 10 carbon atoms; and p is an integer of 0 to 6.] 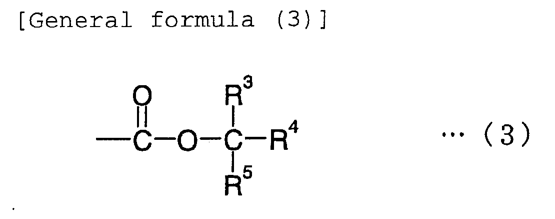 [In the general formula (3), R³, R⁴ and R⁵ are each independently an organic group or are each an organic group which is linked to each other to form a ring.]

2. A process for producing a carboxyl group-containing (co)polymer, set forth in Claim 1, wherein, in the reaction termination step, the (co)polymerization is terminated and carboxyl group is formed.

3. A process for producing a carboxyl group-containing (co)polymer, set forth in Claim 1 or 2, wherein the reaction step includes copolymerization of the functional group-containing olefin compound represented by the general formula (1) and/or the general formula (2), ethylene, an α-olefin having 3 to 12 carbon atoms and, when required, a non-conjugated polyene.

4. A process for producing a carboxyl group-containing (co)polymer, set forth in any one of Claims 1 to 3, wherein the polymerization catalyst component comprises an organoaluminum compound and a vanadium compound.

5. A process for producing a carboxyl group-containing (co)polymer, set forth in any one of Claims 1 to 4, wherein, when the functional group-containing olefin compound represented by the general formula (1) is used, X³ is a functional group represented by the general formula (3), X¹ and X² are each a hydrogen atom, and n is 0 (zero), in the general formula (1).

6. A process for producing a carboxyl group-containing (co)polymer, set forth in any one of Claims 1 to 5, wherein, in the general formula (3), R³, R⁴ and R⁵ are each independently a hydrocarbon group having 1 to 20 carbon atoms, or are each a hydrocarbon group having 1 to 20 carbon atoms which is linked to each other to form a ring.

7. A process for producing a carboxyl group-containing (co)polymer, set forth in any one of Claims 1 to 6, wherein, when the functional group-containing olefin compound represented by the general formula (1) is used, R¹ is a methyl group in the general formula (1).

8. A carboxyl group-containing (co)polymer which is produced by a process for producing a carboxyl group-containing (co)polymer, set forth in any one of Claims 1 to 7.

## Amended claims

### Amended claims under Art. 19.1 PCT

1. A process for producing a carboxyl group-containing (co)polymer, which comprises a reaction step of (co)polymerizing, in the presence of a polymerization catalyst component, at least a functional group-containing olefin compound represented by the following general formula (1) and/or the following general formula (2) and a reaction termination step of terminating the (co)polymerization. 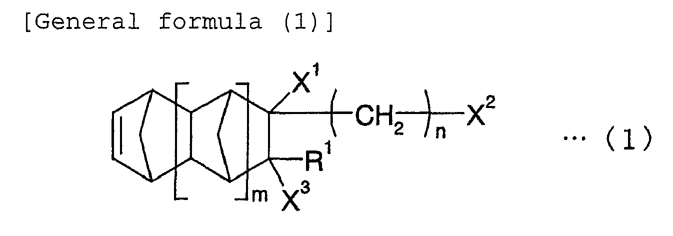 [In the general formula (1), X¹ X² and X³ are each independently a hydrogen atom, a hydrocarbon group having 1 to 10 carbon atoms, or a functional group represented by the following general formula (3). Provided that, at least one of X¹ X² and X³ is a functional group represented by the following general formula (3). R¹ is a hydrogen atom or a hydrocarbon group having 1 to 10 carbon atoms; m is an integer of 0 to 2; and n is an integer of 0 to 5.] 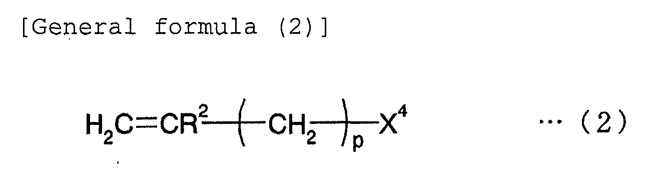 [In the general formula (2), X⁴ is a functional group represented by the following general formula (3). R² is a hydrogen atom or a hydrocarbon group having 1 to 10 carbon atoms; and p is an integer of 0 to 6.] 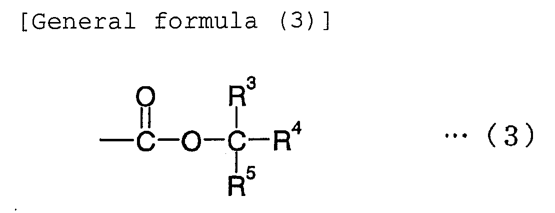 [In the general formula (3), R³, R⁴ and R⁵ are each independently an organic group or are each an organic group which is linked to each other to form a ring.]

2. A process for producing a carboxyl group-containing (co)polymer, set forth in Claim 1, wherein, in the reaction termination step, the (co)polymerization is terminated and carboxyl group is formed.

3. A process for producing a carboxyl group-containing (co)polymer, set forth in Claim 1 or 2, wherein the reaction step includes copolymerization of the functional group-containing olefin compound represented by the general formula (1) and/or the general formula (2), ethylene, an α-olefin having 3 to 12 carbon atoms and, when required, a non-conjugated polyene.

4. A process for producing a carboxyl group-containing (co)polymer, set forth in any one of Claims 1 to 3, wherein the polymerization catalyst component comprises an organoaluminum compound and a vanadium compound.

5. A process for producing a carboxyl group-containing (co)polymer, set forth in any one of Claims 1 to 4, wherein, when the functional group-containing olefin compound represented by the general formula (1) is used, X³ is a functional group represented by the general formula (3), X¹ and X² are each a hydrogen atom, and n is 0 (zero), in the general formula (1).

6. A process for producing a carboxyl group-containing (co)polymer, set forth in any one of Claims 1 to 5, wherein, in the general formula (3), R³, R⁴ and R⁵ are each independently a hydrocarbon group having 1 to 20 carbon atoms, or are each a hydrocarbon group having 1 to 20 carbon atoms which is linked to each other to form a ring.

7. A process for producing a carboxyl group-containing (co)polymer, set forth in any one of Claims 1 to 6, wherein, when the functional group-containing olefin compound represented by the general formula (1) is used, R¹ is a methyl group in the general formula (1).

8. (Deleted)
